# EUROPÄISCHE PATENTANMELDUNG

(11) **EP 2 015 026 A2**
(43) Veröffentlichungstag der Anmeldung: **14.01.2009**
(21) Anmeldenummer: 08009336.2
(22) Anmeldetag: 21.05.2008
(51) Int. Cl.: G01C 21/34

(54) **Verfahren zur dynamischen Navigation von Individualverkehr sowie Vorrichtung, Einrichtung und System dafür**

(30) Priorität: 05.06.2007 DE 102007026493
(71) Anmelder: Deutsche Telekom AG, 53113 Bonn (DE)
(72) Erfinder: Fastenrath, Ulrich, 53121 Bonn (DE); Becker, Markus, 45239 Essen (DE); Deckert, Alan, 52477 Alsdorf (DE); Wörner, Andreas, 65795 Hattersheim (DE)

(57) **Zusammenfassung**

Es wird ein Verfahren zur dynamischen Navigation von Individualverkehr vorgeschlagen, bei dem mindestens eine Route für mindestens einen Teilnehmer des Individualverkehrs berechnet wird, wobei über ein vorgebbares Zeitintervall mindestens zwei Ganglinien (Gh, G1) aus einer Zustandsgröße des Individualverkehrs ermittelt und für die Berechnung der Route hinterlegt werden, wobei für die Berechnung der Route ein Auswahlkriterium bereitgestellt wird, um eine (Gl) der hinterlegten Ganglinien (Gh, Gl) für die Berechnung der Route auszuwählen und heranzuziehen. Demnach werden nun anstelle einer einzigen Ganglinie, welche sich unklassifiziert auf eine Mittelwertbetrachtung über den gesamten Individualverkehr bezieht, nun mindestens zwei Ganglinien (Gh, Gl) entsprechend der statistischen Häufigkeitsverteilungen ermittelt, beide Ganglinien sich vorzugsweise auf die gleiche Kenngröße des Verkehrs beziehen, insbesondere die Reisezeit oder die Geschwindigkeit.. Als Kenngröße bzw. Zustandsgröße kann z.B. die Reisegeschwindigkeit (V) betrachtet und ausgewertet werden. Das Auswahlkriterium kann z.B. ein Indikator sein, der aktuelle und/oder prognostizierbare Störungen des Individualverkehrs anzeigt, wie z.B. ein Indikator, der aus Beobachtungen des Individualverkehrs selbst und/oder seines Umfeldes ermittelt wird, insbesondere aus globalen Beobachtungen zur Frühwarnung bzw. Prognose von Verkehrsstörungen oder aus Wettermeldungen im Umfeld bzw. Gebiet des beobachteten Verkehrs. Das Verfahren kann zumindest in weiten Teilen in einem mobilen Endgerät ausgeführt werden, wobei eine Zentrale das Auswahlkriterium ermittelt und an das mobile Endgerät bzw. Navigationsgerät vorzugsweise über einen TMC-Kanal überträgt.

## Beschreibung

### GEBIET DER ERFINDUNG

Die Erfindung betrifft ein Verfahren zur dynamischen Navigation von Individualverkehr sowie eine Vorrichtung, insbesondere Endgerät, eine Einrichtung, insbesondere Zentrale, und ein System dafür.

Unter "dynamischer Navigation" werden im Kontext des straßengebundenen Individualverkehrs Verfahren zur Navigation mittels Routenberechnung unter Berücksichtigung zeitlich veränderlicher Faktoren verstanden. An erster Stelle dieser Faktoren ist sicherlich die Verkehrslage zu nennen, aber auch andere verkehrsbeeinflussende Faktoren (Einflussfaktoren), wie das Wetter, der Straßenzustand oder Großereignisse sind relevant. Das Verfahren zur Navigation bzw. Routenberechnung kann dabei technisch verschiedenartig ausgeprägt sein: Das Verfahren kann z.B. in einem Endgerät ablaufen ("onboard-Navigation"), wobei das Endgerät mobil oder fest ins Fahrzeug eingebaut sein kann. Oder das Verfahren läuft in einer Zentrale ab ("offboard-Navigation"), wobei die berechneten Routen drahtlos in das Fahrzeug kommuniziert werden. Außerdem kann der Nutzer der Navigation verschiedene Anforderungen stellen bzw. Prioritäten setzen: Er kann nach der kürzesten, schnellsten, schönsten, risikoärmsten etc. Route verlangen. Allen diesen bekannten Verfahren zur Navigationsverfahren und Routenberechnung ist gemeinsam, dass die o.g. zeitabhängigen Einflussfaktoren die zentralen Ergebnisse, wie z.B. die berechnete Route oder die erwartete Ankunftszeit, erheblich beeinflussen. Daher wird in allen bisher bekannten Verfahren und Lösungsansätzen zur dynamischen Navigation versucht, der Routenberechnung diese Einflussfaktoren zugänglich zu machen. Die aus dem Stand der Technik bekannten Lösungen umfassen zwei grundsätzlich verschiedene Herangehensweisen:

Eine erste herkömmliche Herangehensweise ist die Bereitstellung der Verkehrslage in "Echtzeit". Dabei wird der Routenberechnung eine möglichst aktuelle Beschreibung der Verkehrslage, zumeist in Form von kodierten Meldungen über Verkehrsstörungen, zuweilen auch in Form von geschätzten Reisezeiten auf Netzkanten (Streckenabschnitt zwischen zwei Anschlussstellen) zur Verfügung gestellt. Störungsmeldungen oder ungewöhnlich hohe Reisezeiten werden bei der Routenberechnung als erhöhte Streckenwiderstände interpretiert und beeinflussen so die o.g. zentralen Ergebnisse. Diese Form der Dynamisierung ist sowohl für "onboard" (drahtlose Bereitstellung der Verkehrslageinformation) als auch für "offboard"-Varianten (drahtgebundene Bereitstellung der Verkehrslageinformation) realisiert.

Jedoch hat diese Herangehensweise einen entscheidenden Nachteil: Da der interessante Teil der Route immer erst in der Zukunft durchfahren wird, wäre für die Berechnung dieses Teils der Route eine Prognose der Verkehrslage erforderlich. Die aktuelle Verkehrslage allein ist hierfür unzureichend, da sie sehr schnellen Veränderungen unterworfen ist. Nun ist einerseits noch kein Dienst verfügbar, welcher flächendeckende Prognosen zur Nutzung in der dynamischen Navigation zur Verfügung stellt, andererseits sind diesem Unterfangen durch die stochastische Natur des Verkehrs prinzipielle Grenzen gesetzt. Auch aufgrund dieser Einsichten bzw. Schwierigkeiten wurde bereits eine zweite Herangehensweise vorgeschlagen:

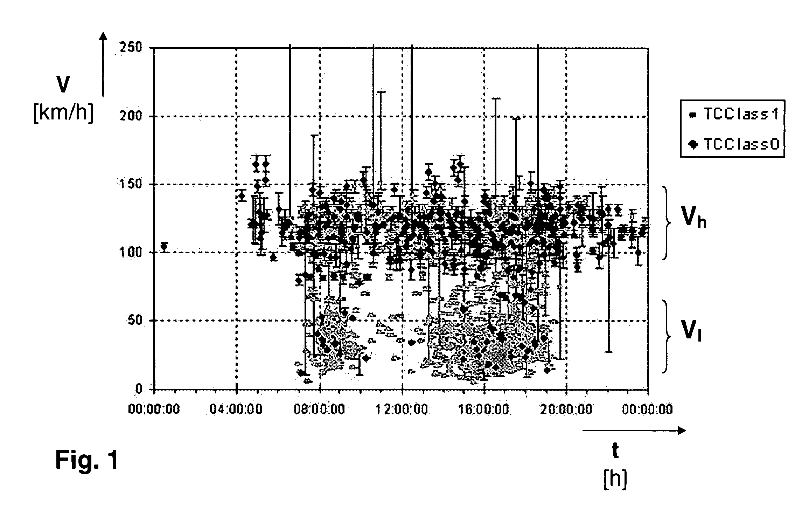

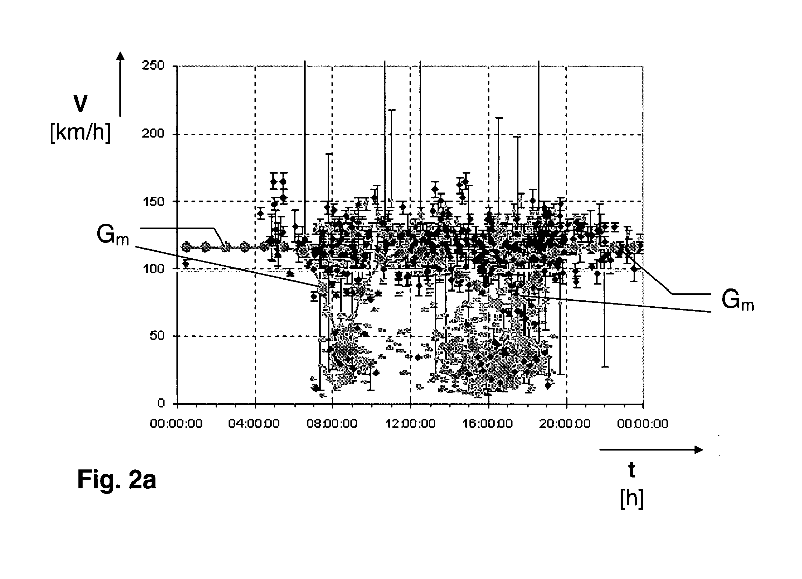

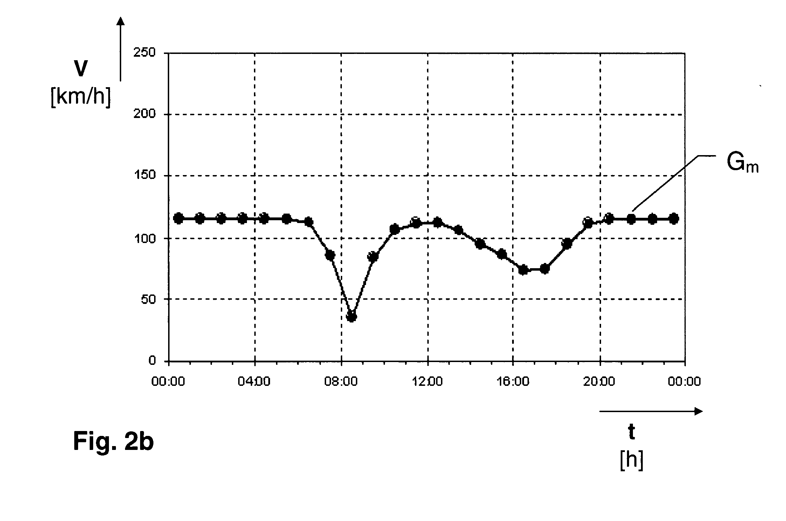

Diese zweite Herangehensweise stützt sich auf eine Hinterlegung historischer Verkehrsinformation. Es ist empirisch belegbar, dass einige Kenngrößen des Verkehrs Periodizitäten aufweisen. So ist z.B. die Verkehrsnachfrage als Funktion der Tageszeit (in Form einer sog. "q-Ganglinie") stark korreliert mit dem Wochentag. In der Folge sind etwa Verkehrsstörungen montags morgens und freitags nachmittags häufiger als zu anderen Zeiten. Daraus ergibt sich z.B. der Lösungsansatz, die für dynamische Navigation besonders relevante Größe, nämlich die Reisezeit bzw. Fahrgeschwindigkeit, ebenfalls in Form von statischen Ganglinien für die Routenberechnungsverfahren zu hinterlegen (sei es offboard oder onboard) und damit die Verkehrsprognose in Echtzeit verzichtbar zu machen. Dabei ergibt sich eine wesentliche Schwierigkeit, die hier anhand der beiliegenden Figuren 1 und 2. veranschaulicht wird: Die Fig. 1 zeigt Messwerte für mittlere streckenabschnittsbezogene Geschwindigkeiten. Diese entsprechen Reisezeiten gemäß der Formel: Reisezeit = Streckenabschnittslänge / Geschwindigkeit. Man erkennt, dass es Häufungen der Messwerte für hohe Geschwindigkeiten (entsprechend freiem Verkehr) und niedrige Geschwindigkeiten (entsprechend gestörtem Verkehr) gibt. Mittlere Werte der Geschwindigkeit werden sehr selten angenommen, d.h. die Häufigkeitsverteilung der Reisezeit ist bimodal. Hinterlegt man nun als Reisezeit-Ganglinie eine durch Mittelwerte der Reisezeiten bestimmte Ganglinie, wie in Fig. 2 gezeigt, so nimmt diese Ganglinie unweigerlich diese seltenen Werte an und führt somit die Routenberechnung auf suboptimale Ergebnisse. Eine bimodale Verteilung wird also durch eine solche Mittelwertbildung nicht ausreichend charakterisiert.

### ZUSAMMENFASSUNG DER ERFINDUNG

Es ist daher Aufgabe der vorliegenden Erfindung, eine verbesserte Lösung vorzuschlagen, die in vorteilhafter Weise die oben genannten Nachteile und Probleme überwindet.

Um die vorgenannte Aufgabe zu erreichen, wird ein Verfahren zur dynamischen Navigation von Individualverkehr vorgeschlagen, bei dem mindestens eine Route für mindestens einen Teilnehmer des Individualverkehrs berechnet wird, wobei über ein vorgebbares Zeitintervall mindestens zwei Ganglinien aus einer Kenngröße, insbesondere eine Zustandsgröße, des Individualverkehrs ermittelt und für die Berechnung der Route hinterlegt werden, wobei für die Berechnung der Route ein Auswahlkriterium bereitgestellt wird, um eine der hinterlegten Ganglinien für die Berechnung der Route auszuwählen und heranzuziehen.

Als Kenngrößen werden hier charakteristische Zustandgrößen für den Verkehr, insbesondere Verkehrsfluss, Verkehrsdichte und/oder Geschwindigkeit, betrachtet sowie daraus abgeleitete Größen, wie z.B. Reisezeiten und/oder sog. Durchschnittliche TagesVerkehrswerte (kurz DTV). Darüber hinaus können weitere Einflussfaktoren, wie z.B. Wetter oder Großereignisse usw. berücksichtigt werden.

Vorzugsweise werden anstelle einer einzigen Ganglinie, welche sich unklassifiziert auf eine Mittelwertbetrachtung über den gesamten Individualverkehr bezieht, nun mindestens zwei Ganglinien entsprechend der statistischen Häufigkeitsverteilungen ermittelt, wobei beide Ganglinien sich vorzugsweise auf die gleiche Kenngröße des Verkehrs beziehen, insbesondere auf die Reisezeit oder die Geschwindigkeit.

Demzufolge wird ein Verfahren zur dynamischen Navigation vorgeschlagen, bei welchem mehrere Ganglinien hinterlegt werden, vorzugsweise zwei Ganglinien, von denen eine dem Zustand des freien Verkehrs und eine dem Zustand des gestörten Verkehrs zugeordnet ist, wobei anhand eines Auswahlkriteriums, das z.B. mindestens ein Indikator für aktuelle und/oder prognostizierbare Störungen des Individualverkehrs sein kann, eine der beiden Ganglinien für die Berechnung der Route herangezogen wird.

Damit wird eine deutliche Verbesserung des Routenberechnungsverfahrens insbesondere im Zusammenhang mit einer dynamischen Navigation erreicht, was sich auch kurz wie folgt darlegen lässt: Die herkömmliche statische Routenberechnung verwendet als Kostenfunktion die Reisezeit, welche sich aus der Streckenlänge und einer für den Straßentyp charakteristischen, in der digitalen Karte hinterlegten Geschwindigkeit ergibt. Sie berücksichtigt Verkehrsstörungen in keiner Weise. Die übliche Form der Dynamisierung berücksichtigt Verkehrsstörungen als Teilstrecken reduzierter Geschwindigkeit, sobald sie bekannt werden. Dies ist in vielen Fällen für eine optimale Routenberechnung zu spät. Durch das hier vorgeschlagene Verfahren jedoch steht dem Routenberechnungsverfahren jederzeit und vorausschauend die jeweils beste bekannte Reisezeitschätzung auf allen Teilstrecken der Route zur Verfügung.

Auch wird eine Vorrichtung, insbesondere ein mobiles Endgerät, zur dynamischen Navigation vorgeschlagen, das Mittel zum Durchführen des erfindungsgemäßen Verfahrens aufweist.

Weiterhin wird eine Einrichtung, insbesondere Zentrale, zur dynamischen Navigation vorgeschlagen, die Mittel zum Durchführen des erfindungsgemäßen Verfahrens aufweist.

Zudem wird auch ein System zur dynamischen Navigation mit einer solchen Vorrichtung und/oder einer solchen Einrichtung vorgeschlagen.

### Vorteilhafte Ausführungen sind den Unteransprüchen zu entnehmen:

Demnach werden bei dem erfindungsgemäßen Verfahren vorzugsweise zur Ermittlung der Ganglinien jeweils Häufigkeitsverteilungen der Zustandsgröße herangezogen, wobei jede Häufigkeitsverteilung die Häufigkeit von Messwerten der Zustandsgröße zu einer bestimmten Zeit innerhalb des Zeitintervalls, insbesondere zu einer Tageszeit innerhalb eines Wochentages, wiedergibt.

Dabei kann die Zustandsgröße mindestens einen Parameter für den Verkehrszustand des Individualverkehrs beschreiben, insbesondere Fahrgeschwindigkeit, Reisezeit und/oder Verkehrsdichte, beschreiben.

Auch können vorzugsweise die Ganglinien bzw. die Häufigkeitsverteilungen anhand von Zeitklassen ermittelt werden, insbesondere anhand von Tagesklassen, die Wochentagen oder speziellen Tagen (z.B. Brückentage, Ferientage etc.) entsprechen. Dabei ergeben sich insbesondere bimodale Häufigkeitsverteilungen, welche die Beschreibung der Tageszeitabhängigkeit durch zwei Ganglinien implizieren.

Vorzugsweise wird als Auswahlkriterium für die Ganglinien mindestens ein Indikator ausgewertet, der aktuelle und/oder prognostizierbare Störungen des Individualverkehrs anzeigt. Dabei kann der Indikator aus Beobachtungen des Individualverkehrs selbst und/oder seines Umfeldes ermittelt werden, insbesondere aus globalen Beobachtungen zur Frühwarnung vor bzw. Prognose von Verkehrsstörungen oder aus Wettermeldungen im Umfeld bzw. Gebiet des beobachteten Verkehrs.

Das Auswahlkriterium kann von einer Zentrale an mindestens ein mobiles Endgerät über einen Funkkanal übertragen werden, insbesondere über einen Rundfunkkanal übertragen werden. Vorzugsweise wird das Auswahlkriterium über einen für den Verkehrsfunk standardisierten Rundfunkkanal übertragen, insbesondere über einen als TMC-Kanal ausgebildeten Rundfunkkanal übertragen, wobei das Auswahlkriterium insbesondere in Form eines TMC-Codes übertragen wird.

Die Ganglinien können in Form von digitalen Karten auf einem Datenträger gespeichert werden, insbesondere auf einem tragbaren Datenträger in Gestalt einer CD oder eines Speicherchips, der in ein mobiles Endgerät einführbar ist, gespeichert werden. Die Ganglinien können aber auch in Form von digitalen Karten zentral als Gangliniendaten gespeichert werden, wobei die Gangliniendaten an mindestens ein mobiles Endgerät übertragen werden.

Vorzugsweise wird das Verfahren in einem mobilen Endgerät, insbesondere an Bord eines Fahrzeuges, und/oder in einer Zentrale ausgeführt.

### DETAILLIERTE BESCHREIBUNG DER ERFINDUNG

Die vorstehenden, ebenso wie die zusätzlichen Aufgaben, Merkmale und Vorteile dieser Erfindung werden noch näher aus der folgenden detaillierten Beschreibung ersichtlich, die auf die beiliegenden schematischen Zeichnungen Bezug nimmt:
- Fig. 1: zeigt eine Darstellung von erhobenen Messwerten zur Fahrgeschwindigkeit des Individualverkehrs über den Zeitverlauf eines Tages;
- Fig. 2a: zeigt innerhalb der Messwerte (entsprechend der Fig. 1) eine durch Mittelwert-Bildung erstellte bzw. errechnete Ganglinie;
- Fig. 2b: zeigt noch deutlicher den zeitlichen Verlauf dieser Ganglinie aus Fig. 2a;
- Fig. 3a: zeigt innerhalb der Messwerte (entsprechend der Fig. 1) zwei entsprechend der Erfindung erstellte bzw. errechnete Ganglinien;
- Fig. 3b: zeigt noch deutlicher den zeitlichen Verlauf dieser zwei Ganglinien aus Fig. 3a;
- Fig. 4: zeigt das Ablaufdiagramm für ein erfindungsgemäßes Verfahren; und
- Fig. 5: zeigt den Aufbau eines erfindungsgemäßen Systems mit seinen wesentlichen Komponenten.

Wie in der Fig. 1 dargestellt ist, werden über den Zeitablauf t eines Tages und bezogen auf einen Streckenabschnitt die Fahrgeschwindigkeiten V von Fahrzeugen gemessen. Diese gemessene Geschwindigkeit V entspricht einer besonders aussagekräftigen Zustandsgröße des Individualverkehrs. Alternativ können z.B. die Reisezeit oder die Verkehrsdichte als Kenngrößen herangezogen werden.

Vorzugsweise werden die Messwerte über mehrere Tage erhoben, insbesondere immer bezogen auf denselben Wochentag. Die Fig. 1 zeigt über den Zeitverlauf t eines Tages, also von 00:00 Uhr bis 24:00 Uhr, hier beispielhaft die erhobenen Messwerte für Geschwindigkeiten V, die an mehreren Dienstagen gemessen wurden. Dabei ergeben sich gewisse Anhäufungen von Messwerten. Jede Anhäufung bildet quasi einen Flecken in der Darstellung der Fig. 1. Der Verlauf der Dichte der Messwerte innerhalb eines schmalen vertikalen Streifens gibt eine Häufigkeitsverteilung wieder. Diese kann z.B. einer Gaußkurve oder auch einer anderen Verteilungsfunktionen folgen (nicht dargestellt). Eine hohe Dichte von Messwerten zeigt dabei ein Maximum in der Verteilung auf.

Anhand der Darstellung in Fig. 1 kann man z.B. bei 8:00 Uhr eine Häufigkeitsverteilung mit zwei Maxima ausmachen, von denen eines bei V = 40 km/h und das andere bei V= 120 km/h liegt. Bezogen auf die betrachtete Zustandgröße, nämlich auf die Geschwindigkeit V, ergibt sich also eine bimodale Verteilung mit Anhäufung im Bereich der hohen Geschwindigkeiten Vh und der niedrigen Geschwindigkeiten Vl.

Üblicherweise würde nun, wie in Fig. 2 und 2b gezeigt, durch Mittelwertbildung eine Ganglinie GLm erstellt bzw. berechnet werden. Diese einzelne Ganglinie würde aber entlang der Scherpunkte aller Messwert-Anhäufungen verlaufen. Wie insbesondere die Fig. 2b veranschaulicht, verläuft ein solche herkömmlich berechnete Ganglinie GLm zu weiten Teilen ohne größere Ausschläge innerhalb eines Bereiches um etwa V = 110 km/h und fällt nur an zwei Stellen, nämlich bei 8:00 Uhr und bei 17:00 Uhr deutlich auf V = 40 km/h bzw. V = 70 km/h ab.

Ausgehend von dieser üblichen Herangehensweise liegt der Erfindung nun insbesondere die Erkenntnis zu Grunde, dass eine solche bimodale Verteilung der Zustandsgröße (z.B. Geschwindigkeit V oder auch Reisezeit) besser mit zwei Ganglinien beschrieben werden kann, als durch eine einzige Ganglinie (wie in Fig. 2a/b dargestellt).

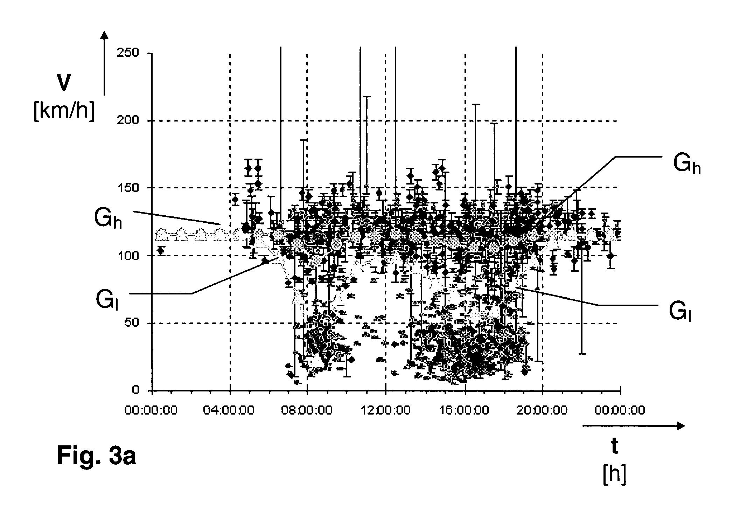

Wie in Fig. 3a gezeigt wird, werden nun erfindungsgemäß anhand der erfassten Messwerte (vergl. Fig. 1) eine erste Ganglinie GLh und eine zweite Ganglinie GL1 erstellt bzw. errechnet. Dabei werden entlang der Zeitachse t die sich ausprägenden Maxima berücksichtigt und zwar zum einen für den freien Verkehr im Bereich der höheren Geschwindigkeiten Vh und zum anderen für den gestörten Verkehr im Bereich der niedrigen Geschwindigkeiten Vl.

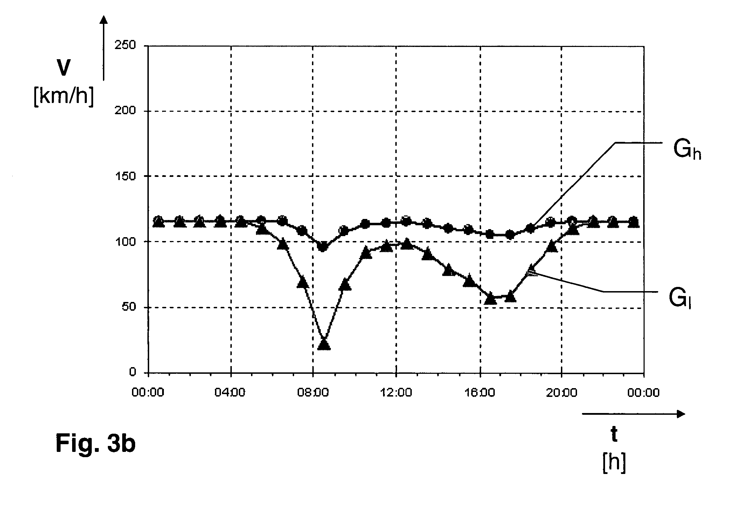

Somit erhält man eine erste, obere Ganglinie GLh für den Zustand des freien Verkehrs und eine zweite, untere Ganglinie GL1 für den Zustand des gestörten Verkehrs. Wie die Fig. 3b im Vergleich mit Fig. 3a zeigt, liegen die Ganglinien GLh und GL1 in verkehrsstarken Zeiten (siehe Zeitintervall von 7:00 bis 19:00 Uhr) zum Teil weit auseinander. In verkehrsarmen Zeiten (früh Morgens vor 6:00 Uhr und Abends/Nachts nach 20:00 Uhr) fallen die beiden Ganglinien zusammen. Denn in Zeitpunkten bzw. Zeitbereichen, zu denen die Häufigkeitsverteilung nur ein Maximum ausbildet, sind die Werte der Ganglinien gleich oder nahezu gleich.

Erfindungsgemäß sind nun entsprechend der Darstellung in Fig. 3a/b zwei Ganglinien GLh und GL1 ermittelt worden, die in Form einer digitalen Karte in einem Speicher abgelegt werden, um für spätere Routenberechnungen verwendet zu werden zu können.

Durch Hinterlegung von zwei oder sogar mehr Ganglinien ergibt sich eine umfassende Beschreibung der Statistik des Zustandes, also z.B. der Reisezeiten, auf den beobachteten Streckenabschnitten. Das Routenberechnungsverfahren (onboard oder offboard) benötigt aber zusätzlich zu dem nunmehr doppelt so großen Ganglinienbestand brauchbare Hinweise darauf, welche der beiden (oder ggf. noch mehr) Ganglinien im konkreten Fall denn zu verwenden ist. Insbesondere in den Fällen, in denen die Berechnung des Ganglinienbestandes und die Bestimmung der Verkehrslage in Echtzeit in der gleichen Zentrale vorgenommen werden, ist diese in der Lage, Umstände zu erkennen, welche die Verwendung der Ganglinie für gestörten Verkehr nahe legen und diese dem Routenberechnungsverfahren als Auswahlkriterium in Form von Warnungen oder dynamischen Selektoren zur Verfügung zu stellen. In Falle der offboard-Navigation erfolgt dies vorzugsweise durch einen drahtgebundenen, im Falle der onboard-Navigation durch einen drahtlosen Kommunikationsmechanismus.

Für eine drahtlose Kommunikation bzw. Funkübertragung eignen sich insbesondere standardisierte Rundfunkkanäle, wie z.B. sogenannte TMC-Kanäle (Traffic Message Channel). Es handelt sich dabei um Funkkanäle eines digitalen Radio-Datendienstes, der über RDS (Radio Data System) ausgestrahlt wird und zur Übertragung von Verkehrsstörungen an ein geeignetes Empfangsgerät verwendet wird. Das RDS ermöglicht die Übermittlung von Nicht-Audio-Zusatzinformation beim Radio bzw. Rundfunk. Da das Signal ständig übertragen wird, ist der Benutzer weniger von den üblicherweise nur halbstündlich ausgestrahlten Verkehrshinweisen abhängig. Außerdem können wichtige Informationen, wie z.B. bei Falschfahrern, sofort weitergegeben werden. Moderne Navigationssysteme verwenden TMC zur automatischen Umfahrung von Verkehrsstaus und Behinderungen (dynamische Zielführung).

Ein bevorzugter Kandidat für einen dynamischen Selektor, welcher das Routenberechnungsverfahren veranlassen könnte, Ganglinien für gestörten Verkehr zu verwenden, ist z.B. ein Indikator zur Frühwarnung vor Verkehrszusammenbrüchen an Engstellen. Die Zentrale könnte aber auch Warnungen herausgeben, welche aus dem Wetter, der Wetterprognose, geplanten Großereignissen oder anderen Einflussfaktoren abgeleitet sind, und welche auf den straßengebunden Verkehr wirken.

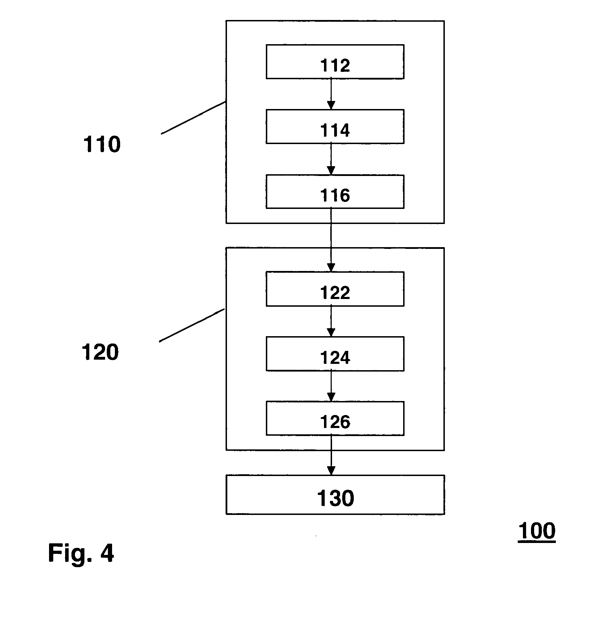

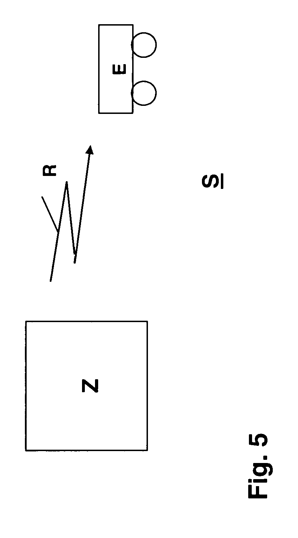

Das hier vorgeschlagene Verfahren wird nun anhand der Fig. 4 noch näher beschrieben. Dabei wird auch auf die Fig. 5 Bezug genommen, welche schematisch den Aufbau eines erfindungsgemäßes Systems mit seinen wesentlichen Komponenten zeigt.

Das Verfahren 100 hat im wesentlichen drei Abschnitte bzw. Schritte 110 bis 130, die auch einzelne Teilschritte umfassen können.

Das Verfahren wird zum Teil innerhalb einer Zentrale Z des System S durchgeführt und zum Teil innerhalb eines mobilen Endgerätes E, das über einen Funkkanal, vorzugsweise TMC-Kanal, von der Zentrale Z Signale empfängt.

Im Abschnitt 110 werden zunächst (innerhalb der Zentrale) die zwei Ganglinien (s. Fig. 3a/b) ermittelt. Das geschieht im Teilschritt 112 vorzugsweise anhand der oben beschriebenen Bildung der Häufigkeitsverteilungen und anhand von Zeitklassen, wie z.B. Wochentagen. Danach folgt der Teilschritt 114, in dem die Verläufe der Ganglinien selbst in Form von Daten bestimmt werden, die insbesondere von Navigationsgeräten gelesen werden können. Danach werden dann im Teilschritt 116 diese Daten bzw. die Ganglinien elektronisch gespeichert. Das kann z.B. auf Datenträgern, insbesondere CDs erfolgen, die an Benutzer von Navigationsgeräten verkauft werden können. Die Daten würden dann lokal im Navigationsgerät gespeichert bzw. abgelegt sein.

Im nächsten Abschnitt 120 folgt dann die Ermittlung und Bereitstellung eines Auswahlkriteriums für die erfindungsgemäße Selektion einer passenden Ganglinie, die dann anschließend im Schritt 130 für die Routenberechnung verwendet wird. Für das Auswahlkriterium wird zunächst im Teilschritt 122 ein Indikator, z.B. Stauwamungs-Meldungen, bestimmt. Wenn eine Indikation eintritt, d.h. wenn sich also ein Stau bilden sollte oder die Wahrscheinlichkeit dafür hinreichend groß ist, ergeht eine entsprechende Warnung von der Zentrale Z aus an das jeweilige Endgerät E oder an das in der gleichen oder einer anderen Zentrale Z' angeordnete offboad-Routenberechnungsverfahren. Ersteres geschieht im Teilschritt 124 durch eine Funkübertragung, die vorzugsweise über einen TMC-Kanal erfolgt, wobei als Indikator z.B. der TMC-Code für erwarteten Stau "Queuing Traffic Expected" verwendet werden kann, letzteres geschieht vorzugsweise durch eine drahtgebundene Kommunikation zwischen Z und Z'. Damit kann das jeweilige Endgerät E, welches die zwei Ganglinien gespeichert hat, oder das Routenberechnungsverfahren in Z' eine Auswahl für die Berechnung der Route treffen. Das geschieht "onboard" (oder "Offboard") im Teilschritt 126. Beispielsweise zeigt der Indikator den erwarteten Stau an, wodurch das Endgerät E die Ganglinie GL1 (s. Fig. 3b) nimmt, um die Navigation durchzuführen.

Die eigentliche Routenberechnung bzw. Navigation, welche nicht Schwerpunkt der Erfindung ist, erfolgt dann nach üblichen Methoden schließlich im Schritt 130.

## Patentansprüche

1. Verfahren (100) zur dynamischen Navigation von Individualverkehr, bei dem mindestens eine Route für mindestens einen Teilnehmer des Individualverkehrs berechnet wird (Schritt 130), wobei über ein vorgebbares Zeitintervall mindestens zwei Ganglinien (Gh, Gl) aus einer Kenngröße des Individualverkehrs ermittelt und für die Berechnung der Route hinterlegt werden (Schritt 110), wobei für die Berechnung der Route ein Auswahlkriterium bereitgestellt wird, um eine (G1) der hinterlegten Ganglinien (Gh, Gl) für die Berechnung der Route auszuwählen und heranzuziehen (Schritt 120).

2. Verfahren (100) nach Anspruch 1, wobei die Kenngröße mindestens einer Zustandsgröße für den Individualverkehr entspricht, insbesondere Verkehrsfluss, Verkehrsdichte und/oder Geschwindigkeit.

3. Verfahren (100) nach Anspruch 1, wobei die Kenngröße mindestens einer aus einer oder mehreren Zustandsgrößen für den Individualverkehr abgeleiteten Größe entspricht, insbesondere Reisezeit und/oder durchschnittliche Tagesverkehrswerte.

4. Verfahren (100) nach einem der Ansprüche 1 bis 3, wobei zur Ermittlung der Ganglinien (Gh, Gl) jeweils Häufigkeitsverteilungen der Kenngröße herangezogen werden (Schritt 112), und wobei jede Häufigkeitsverteilung die Häufigkeit von Messwerten der der Kenngröße zu einer bestimmten Zeit innerhalb des Zeitintervalls, insbesondere zu einer Tageszeit innerhalb eines Wochentages, wiedergibt.

5. Verfahren (100) nach einem der vorhergehenden Ansprüche, wobei die Kenngröße mindestens einen Parameter für den Verkehrszustand des Individualverkehrs beschreibt, insbesondere Fahrgeschwindigkeit (V), Reisezeit und/oder Verkehrsdichte, beschreibt.

6. Verfahren (100) nach Anspruch 5, wobei anhand der Zustandsgröße auf den Verkehrszustand des Individualverkehrs geschlossen wird, insbesondere auf einen Verkehrszustand für freien Verkehr oder für gestörten Verkehr.

7. Verfahren (100) nach einem der vorhergehenden Ansprüche, wobei die Ganglinien (Gh, Gl) bzw. die Häufigkeitsverteilungen anhand von Zeitklassen ermittelt werden (Schritt 112), insbesondere anhand von Tagesklassen, die jeweils einem Wochentag zugeordnet sind.

8. Verfahren nach (100) Anspruch 7, wobei anhand der Zeitklassen bimodale Häufigkeitsverteilungen ermittelt werden (Schritt 112).

9. Verfahren (100) nach einem der vorhergehenden Ansprüche, wobei als Auswahlkriterium für die Ganglinien (Gh, Gl) mindestens ein Indikator bereitgestellt bzw. ausgewertet wird (Schritt 122), der aktuelle und/oder prognostizierbare Störungen des Individualverkehrs anzeigt.

10. Verfahren (100) nach Anspruch 9, wobei der Indikator aus Beobachtungen des Individualverkehrs selbst und/oder seines Umfeldes ermittelt wird (Schritt 122), insbesondere aus globalen Beobachtungen zur Frühwarnung vor bzw. Prognose von Verkehrsstörungen oder aus Wettermeldungen im Umfeld bzw. Gebiet des beobachteten Verkehrs.

11. Verfahren (100) nach einem der vorhergehenden Ansprüche, wobei das Auswahlkriterium von einer Zentrale an mindestens ein mobiles Endgerät über einen Funkkanal übertragen wird, insbesondere über einen Rundfunkkanal übertragen wird (Schritt 124).

12. Verfahren (100) nach Anspruch 10, wobei das Auswahlkriterium über einen für den Verkehrsfunk standardisierten Rundfunkkanal übertragen wird, insbesondere über einen als TMC-Kanal ausgebildeten Rundfunkkanal übertragen wird, wobei das Auswahlkriterium insbesondere in Form eines TMC-Codes übertragen wird (Schritt 124).

13. Verfahren (100) nach einem der vorhergehenden Ansprüche, wobei die Ganglinien (Gh, Gl) z.B. als Bestandteil von digitalen Karten auf einem Datenträger gespeichert werden, insbesondere auf einem tragbaren Datenträger in Gestalt einer CD oder eines Speicherchips, der in ein mobiles Endgerät einführbar ist, gespeichert werden (Schritt 116).

14. Verfahren nach einem der vorhergehenden Ansprüche, wobei die Ganglinien (Gh, Gl) zentral als Gangliniendaten gespeichert werden, und wobei die Gangliniendaten an mindestens ein mobiles Endgerät übertragen werden.

15. Verfahren (100) nach einem der vorhergehenden Ansprüche, wobei das Verfahren in einem mobilen Endgerät, insbesondere an Bord eines Fahrzeuges, ausgeführt wird und/oder in einer Zentrale ausgeführt wird.

16. Vorrichtung, insbesondere mobiles Endgerät (E), zur dynamischen Navigation, das Mittel zum Durchführen des Verfahrens nach Anspruch 1 aufweist.

17. Einrichtung, insbesondere Zentrale (Z), zur dynamischen Navigation, die Mittel zum Durchführen des Verfahrens nach Anspruch 1 aufweist.

18. System (S) zur dynamischen Navigation mit einer Vorrichtung nach Anspruch 16 und/oder einer Einrichtung nach Anspruch 17.
